# EUROPÄISCHE PATENTSCHRIFT

(11) **EP 2 994 258 B1**
(45) Veröffentlichungstag und Bekanntmachung des Hinweises auf die Patenterteilung: **30.10.2019**
(21) Anmeldenummer: 15749718.1
(22) Anmeldetag: 24.07.2015
(51) Int. Cl.: B23D 5/00, B23D 11/00, B23D 13/02, B23D 81/00, B23Q 15/14, B23B 29/034

(54) **VERFAHREN ZUR SPANABHEBENDEN FERTIGUNG VON VERTIEFUNGEN IN WERKSTÜCKEN SOWIE VORRICHTUNG HIERZU**
METHOD FOR THE PRODUCTION OF RECESSES IN WORKPIECES IN A CHIP-REMOVING MANNER AND DEVICE THEREFOR
PROCÉDÉ DE RÉALISATION PAR ENLÈVEMENT DE COPEAUX D'ÉVIDEMENT DANS DES PIÈCES ET DISPOSITIF ASSOCIÉ

(30) Priorität: 28.07.2014 DE 102014011199
(43) Veröffentlichungstag der Anmeldung: 16.03.2016
(73) Patentinhaber: Deitert, Heinz, 33442 Herzebrock-Clarholz (DE)
(72) Erfinder: Deitert, Heinz, 33442 Herzebrock-Clarholz (DE)
(74) Vertreter: Schober, Mirko
(86) Internationale Anmeldenummer: PCT/EP2015/001531
(87) Internationale Veröffentlichungsnummer: WO 2016/015851

(56) Entgegenhaltungen:
- WO-A-89/08522
- DE-A1- 3 437 411
- JP-A- S63 123 603
- US-A1- 2012 201 623
- US-A1- 2012 312 133
- US-A1- 2015 056 037

## Beschreibung

### TECHNISCHES GEBIET

Die Erfindung betrifft ein Verfahren zur Bearbeitung von Werkstücken, insbesondere zur Fertigung von Nuten in Kunststoff- oder Aluminium-Spritzgussformen, RIM-Formen oder Reifenformen sowie eine Vorrichtung zur Bearbeitung von Werkstücken gemäß dem Oberbegriff des Anspruchs 1. Eine solche Vorrichtung ist aus der US 2012/0312133 A1 bekannt.

### STAND DER TECHNIK

Bei der Bearbeitung von Werkstücken weisen spanabhebende Verfahren den Vorteil auf, dass mit ihnen sehr vielfältige Konturen hergestellt werden können.

Derzeit werden auf dem Gebiet der spanabhebenden Bearbeitung von Werkstücken komplizierte Werkstückgeometrien regelmäßig durch Fräsverfahren hergestellt. Dabei wird ein rotierendes Werkzeug, welches normalerweise eine Mehrzahl von Schneiden aufweist, am Werkstück in Eingriff gebracht. Das Werkzeug rotiert während es entlang einer vorgegebenen Bewegungsbahn bewegt wird. Dabei führen die einzelnen Schneiden des Fräsers eine Vielzahl von Schnittbewegungen entlang der Bewegungsbahn aus, indem sie nacheinander in den Werkstoff des Werkstücks einschneiden und einen Span abheben. Die Fräswerkzeuge sind dabei häufig an Mehrachs-Bearbeitungsköpfen aufgenommen. Hierdurch können die Fräswerkzeuge nahezu beliebige Bewegungsbahnen relativ zum Werkstück beschreiben und so auch komplexe Geometrien formen.

Einen Nachteil weisen diese Verfahren bei der Fertigung von Werkstückgeometrien auf, die es erfordern, dass das Werkzeug in räumlich beengte Vertiefungen der Werkstückstruktur eintaucht, wie es beispielsweise bei der Fertigung von Nuten in Werkstücken der Fall ist. Soll hier eine entsprechende räumlich beengte Werkstückgeometrie erzeugt werden, so erfordert dies zwingend, dass das Werkzeug, das in die Vertiefung eintauchen können muss, eine entsprechend geringe räumliche Ausdehnung aufweist. An dem Werkzeug müssen jedoch gleichzeitig eine Mehrzahl Schneiden angebracht sein, was dazu führt, dass es sich bei den einzelnen Schneiden des Werkzeugs um äußerst filigrane Gebilde handelt, was letztendlich dazu führt, dass die bei der spanabhebenden Bearbeitung auf Werkzeugschneiden wirkenden Kräfte entsprechend gering gehalten werden müssen. In der Praxis bedeutet dies, dass nur mit sehr geringen Vorschubgeschwindigkeiten gearbeitet werden kann. Hierdurch wird die Herstellung von vielen möglichen Werkstückgeometrien, insbesondere solchen, welche Vertiefungen, wie insbesondere Nuten in ihrer Kontur aufweisen, entsprechend zeitraubend.

Die US 2012/0312133 A1 offenbart eine Werkzeugmaschine zur spanabhebenden Bearbeitung von Werkstücken, bei denen ein Linearantrieb rotierend an einer ersten Rotationsachse aufgenommen ist. Ein Werkzeug ist entlang des Linearantriebs verfahrbar, an diesem aufgenommen und gegenüber dem Linearantrieb um eine zweite Achse rotierbar. Die beiden Rotationsachsen sind parallel zueinander und rechtwinklig zur Verfahrrichtung des Linearantriebs angeordnet. Diese Werkzeugmaschine erlaubt es, eckige Werkstückgrundformen nach Art einer Drehbearbeitung zu erzeugen. Hinsichtlich der darstellbaren Werkstückgeometrien ist eine derartige Vorrichtung jedoch eingeschränkt, insbesondere ist es schwierig, komplexe Geometrien, welche Nuten in den Werkstücken aufweisen, herzustellen.

### DIE ERFINDUNG

Der Erfindung liegt daher die Aufgabe zugrunde, ein Verfahren und eine Vorrichtung aufzuzeigen, welche eine schnellere und damit eine effizientere Fertigung ermöglichen.

Die Aufgabe wird gelöst durch ein Verfahren und eine Vorrichtung mit den Merkmalen der unabhängigen Ansprüche. Die Merkmale der abhängigen Ansprüche betreffen vorteilhafte Ausführungsformen.

Erfindungsgemäß wird das Werkzeug um eine erste Werkzeugschwenkachse in Abhängigkeit von dem Verlauf einer vorgegebenen Bewegungsbahn, entlang der eine spanabhebende Schnittbewegung durchgeführt wird, verschwenkt. Hierdurch wird es ermöglicht, Schnittbewegungen an Werkstücken auf gekrümmten Bewegungsbahnen durchzuführen, ohne ein rotierendes Werkzeug verwenden zu müssen. Idealerweise kann ein Werkzeug mit einer einzigen Schneide verwendet werden, die durch das Verschwenken des Werkzeugs relativ zum Werkstück an jeder Stelle der Bewegungsbahn und damit der Schnittbewegung eine für den spanabhebenden Schnittvorgang günstige Orientierung zum Material des Werkstücks aufweist.

Da nicht - wie es bei einem rotierenden Fräser der Fall ist - eine Vielzahl Schneiden benötigt wird, kann die - vorzugsweise einzige - Schneide des Werkzeugs derart ausgeführt werden, dass sie wesentlich größere, aus dem Schnittvorgang resultierende Kräfte aufnehmen kann, als dies bei einem Fräser der Fall wäre, der für die gleiche Aufgabe hinsichtlich der mit dem spanabhebenden Verfahren zu fertigenden Kontur ausgelegt ist.

Diese Fähigkeit zur Aufnahme größerer Kräfte wird gemäß der vorliegenden Erfindung dadurch ausgenutzt, dass die Werkzeugaufnahme, in der das Werkzeug aufgenommen ist, an einem Linearantrieb angeordnet ist. Dieser ist wiederum selbst um eine Linearantriebs-Schwenkachse schwenkbar an einem Werkzeugträger aufgenommen. Durch diese erfindungsgemäße Anordnung können bedeutend höhere Schnittgeschwindigkeiten realisiert werden, als es bei konventionell aufgebauten Maschinen der Fall ist. Wäre das Werkzeug um seine Werkzeugschwenkachse direkt am Werkzeugträger aufgenommen, so müsste die Schnittbewegung alleine durch Antriebe verursacht werden, welche eine Relativbewegung des Werkzeugträgers zum Werkstück bewirken. Hierfür ist es jedoch notwendig, vergleichsweise hohe Massen zu bewegen. Es müsste entweder der Werkzeugträger oder das Werkstück oder beides bewegt werden. Bei einer Bewegung des Werkstücks kommt hierbei noch die Bewegung der Masse der Werkstückaufnahme hinzu. Die Werkzeugträger sind bei Vorrichtungen der in Rede stehenden Art regelmäßig allein schon aus Steifigkeitsgründen sehr massiv ausgelegt. Da die Relativbewegung zwischen Werkzeugträger und Werkstück erfindungsgemäß in alle drei Raumrichtungen möglich sein soll, um eine hinreichende Flexibilität bei der Bearbeitung zu erreichen, wird eine Realisierbarkeit der Verfahrantriebe des Werkzeugträgers vergleichsweise aufwendig. So kann es beispielsweise notwendig sein, eine einen Arbeitsraum einer Maschine überspannende Quertraverse entlang von Linearführungen zu bewegen, wobei der Werkzeugträger regelmäßig noch in wenigstens eine Raumrichtung relativ zu dieser Quertraverse verfahrbar an dieser aufgenommen ist. Auch müssen die Linearantriebe für die Relativbewegungen zwischen Werkzeugträger und Werkstück regelmäßig sehr große Verfahrbereiche abdecken, so dass auch allein durch die schieren Abmessungen der benötigten Linearantriebe mit ihren Bauteilen, wie Führungen und dergleichen, eine Großmasse erzeugt wird.

Durch die erfindungsgemäße konstruktive Lösung kann dagegen ein Linearantrieb an dem Werkzeugträger aufgenommen werden, der mit der Werkzeugaufnahme und dem darin aufgenommenen Werkzeug nur eine vergleichsweise geringe Masse bewegen muss. Hierdurch kann dieser Antrieb hohe Bewegungsgeschwindigkeiten des Werkzeugs relativ zum Werkzeugträger ermöglichen. So ermöglicht der Linearantrieb vorzugsweise Bewegungsgeschwindigkeiten des Werkzeugs relativ zum Werkzeugträger von wenigstens 80 m/min., vorzugsweise von wenigstens 120 m/min. Auf diese Weise kann der Linearantrieb in vorteilhafter Weise den Hauptbeitrag zur Schnittgeschwindigkeit leisten.

Nach dem erfindungsgemäßen Verfahren überlagern sich so die Bewegungen des Werkzeugträgers relativ zum Werkstück und des Werkzeugs relativ zum Werkzeugträger zu einer Bewegung des Werkzeugs relativ zum Werkstück. Auf diese Weise kann der vergleichsweise schnelllaufende Linearantrieb einen Hauptbeitrag zur Schnittgeschwindigkeit leisten, während die erfindungsgemäße dreiachsige relative Verfahrbarkeit des Werkzeugträgers relativ zum Werkstück über vergleichsweise weite Verfahrwege die Erzeugung komplexer Bewegungsbahnen des Werkzeugs relativ zum Werkstück und damit die Herstellung flexibler Werkstückgeometrien ermöglicht.

Das erfindungsgemäße Verfahren eignet sich insbesondere für die Fertigung von Spritzgussformen, RIM-Formen und/oder Formen für Reifen. Die nach dem erfindungsgemäßen Verfahren zu fertigenden Vertiefungen können so vorzugsweise zur Formung von steg- oder rippenförmigen Verstärkungen dienen.

Weiterhin ermöglicht die Tatsache, dass durch den Linearantrieb lediglich geringe Massen bewegt werden müssen, dass eine Beschleunigung bzw. eine Verzögerung der Bewegung des Werkzeugs relativ zum Werkstück in kürzester Zeit und damit auf engstem Raum ermöglicht werden kann. Hierfür ermöglicht der Linearantrieb vorzugsweise Beschleunigungen und/oder Verzögerungen des Werkzeugs relativ zum Werkzeugträger von wenigstens 50 m/sek² besonders vorzugsweise von wenigstens 80 m/sek².

Vorzugsweise wird dabei das Werkzeug so verschwenkt, dass die relative Ausrichtung der Schneide zur Richtung der Schnittbewegung an jedem Ort entlang der Bewegungsbahn zumindest im Wesentlichen die gleiche ist. Dies ist insbesondere bei der Fertigung von rillenartigen Vertiefungen wie Nuten vorteilhaft. Hier kann das Werkzeug so gestaltet werden, dass das Werkzeug oder ein Werkzeugbereich bei der Fertigung in die Nut eintauchen kann. Die Schneide ist dann vorzugsweise an dem dem Nutgrund zugewandten Ende des Werkzeugs bzw. des Werkzeugbereichs angeordnet.

Vorzugsweise ist die Gestaltung des Werkzeugs nun so, dass es eine erste Haupterstreckungsrichtung aufweist, die vorzugsweise der ersten Werkzeugschwenkachse, um die das Werkzeug nach dem erfindungsgemäßen Verfahren verschwenkt wird, entspricht.

Vorzugsweise weist das Werkzeug bzw. der Werkzeugbereich darüber hinaus eine zweite Haupterstreckungsrichtung auf, wodurch das Werkzeug bzw. der Werkzeugbereich insgesamt eine flächige Formgebung erhält. Vorzugsweise wird das Verfahren nun derart durchgeführt, dass die zweite Haupterstreckungsrichtung des Werkzeugs der Schnittrichtung, also der Bewegungsrichtung an der jeweiligen Stelle der Bewegungsbahn entspricht. Die Reaktionskräfte aus der Schnittbewegung auf das Werkzeug wirken so hauptsächlich in Richtung der zweiten Haupterstreckungsrichtung, d.h. in der Richtung auf das Werkzeug, in der es aufgrund seiner flächigen Gestaltung für die Aufnahme hoher Reaktionskräfte prädestiniert ist.

Gleichzeitig können durch die flächige Gestaltung des Werkzeugs bzw. des Werkzeugbereichs auch Konturen, wie beispielsweise schmale Nuten, leicht realisiert werden, da in der Breitenrichtung einer zu fertigenden Nut keine der Haupterstreckungsrichtungen, also der Richtungen, in denen das Werkzeug bzw. der Werkzeugbereich seine größte räumliche Ausdehnung aufweist, orientiert sind. Vorzugsweise ergibt sich so eine in etwa schwert- oder finnenförmige Gestaltung des Werkzeugs bzw. des Werkzeugbereichs.

### KURZBESCHREIBUNG DER ZEICHNUNGSABBILDUNGEN

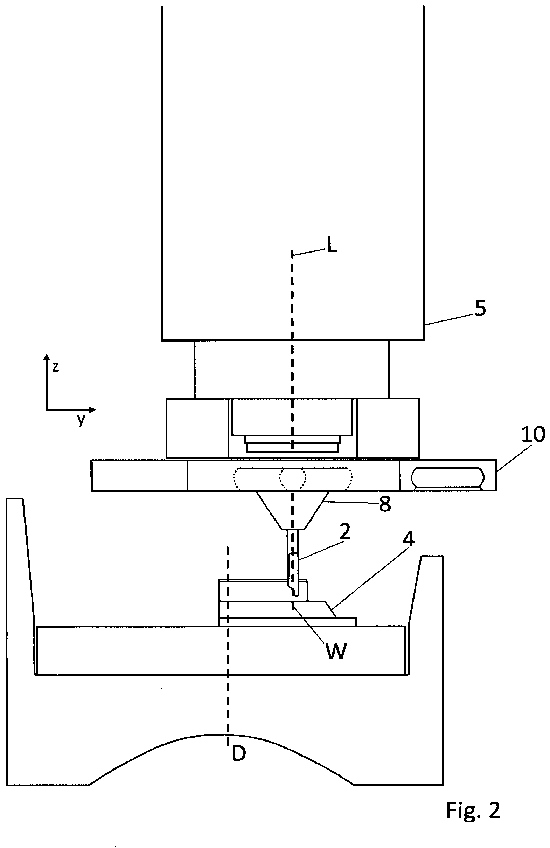

Die Erfindung wird im Folgenden anhand der Figuren 1 bis 11 schematisch näher erläutert.
Fig. 1 zeigt eine schematische Darstellung einer beispielhaften Vorrichtung.
Fig. 2 zeigt eine schematische Darstellung eines vergrößerten Ausschnitts aus Fig. 1.
Fig. 3 zeigt ebenfalls eine schematische Darstellung eines vergrößerten Ausschnitts aus Fig. 1 in einer perspektivischen Ansicht während der Durchführung der Schnittbewegung.
Fig. 4 zeigt eine entsprechende perspektivische Ansicht zu Beginn und Fig. 5 eine entsprechende perspektivische Ansicht zum Ende einer Schnittbewegung.
Fig. 6 zeigt noch einmal eine perspektivische Ansicht während der Schnittbewegung aus einer den Fig. 4 und 5 entsprechenden Perspektive.
Fig. 7 zeigt eine perspektivische Darstellung einer vorteilhaften erfindungsgemäßen Fertigung einer Nut mit einer starken Krümmung.
Fig. 8 und 9 zeigen schematische Darstellungen der Fertigung der Nut aus Fig. 7 aus anderen Perspektiven zu einem späteren Stadium.
Fig. 10 und 11 zeigen schematische Darstellungen verschiedener beispielhafter Werkzeuge für eine erfindungsgemäße Vorrichtung.
Fig. 12 zeigt eine schematische Darstellung eines Teils einer beispielhaften erfindungsgemäßen Vorrichtung.

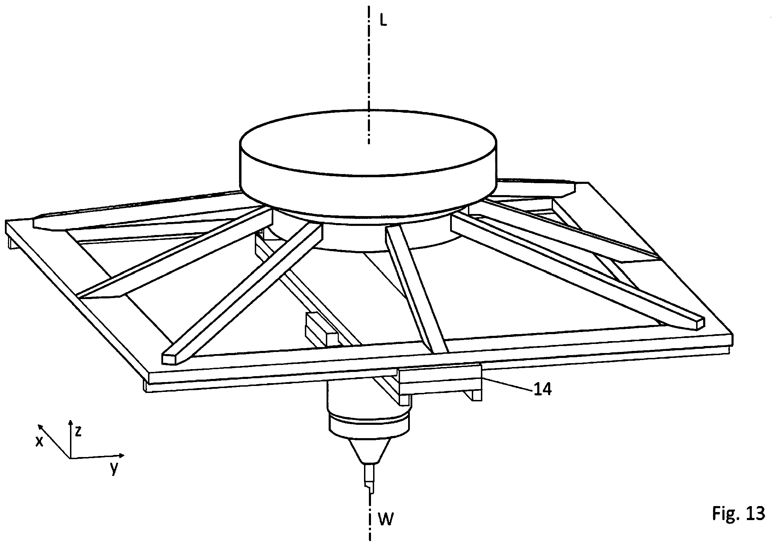

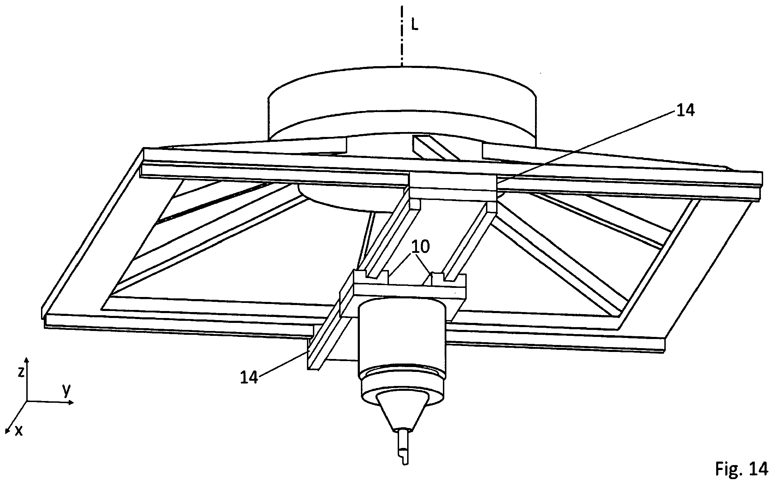

Fig. 13 und 14 zeigen die an dem Werkzeugträger aufnehmbare Linearantriebseinheit der in Fig. 12 dargestellten beispielhaften erfindungsgemäßen Vorrichtung.

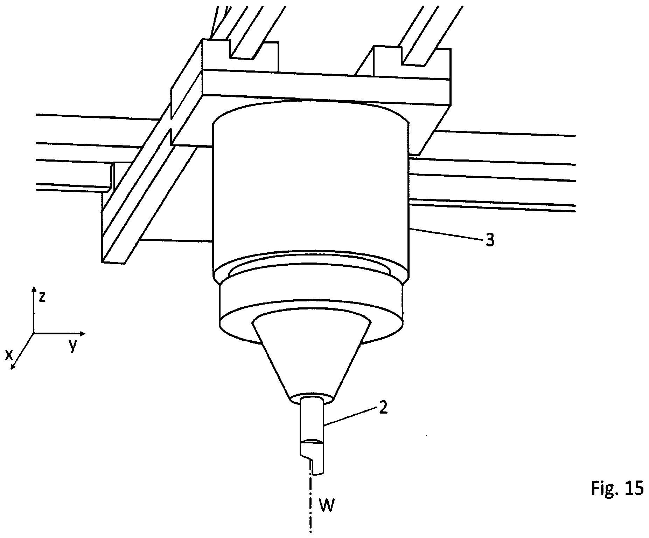

Fig. 15 zeigt eine Detailansicht aus Fig. 14.

### WEG ZUR AUSFÜHRUNG DER ERFINDUNG

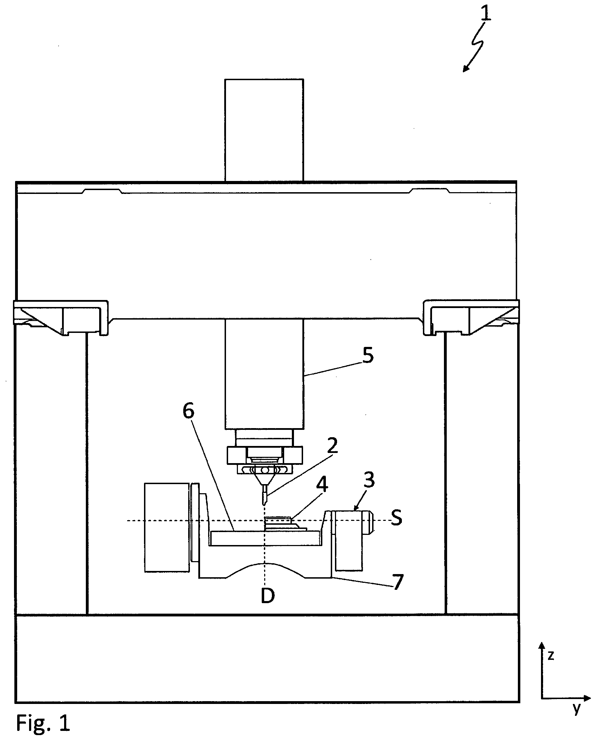

Die in Fig. 1 beispielhaft dargestellte Vorrichtung 1 stellt keine Ausführungsform der Erfindung gemäß dem Anspruch 1 dar, sondern ein Beispiel, das das Verständnis der Erfindung erleichtert. Die Vorrichtung weist ein Werkzeug 2 und eine Werkstückaufnahme 3 auf.

Das Werkzeug 2 kann durch die Vorrichtung 1 relativ zu einem in der Werkstückaufnahme 3 aufgenommenen Werkstück 4 entlang einer vorgebbaren Bewegungsbahn bewegt werden. Im Fall der in Fig. 1 beispielhaft gezeigten Vorrichtung 1 ist dies insbesondere durch einen in die Raumrichtungen X, Y und Z verfahrbaren Werkzeugträger 5 und die Ausgestaltung der Werkstückaufnahme 3 gewährleistet. Die Werkstückaufnahme 3 ist im gezeigten Beispiel in vorteilhafter Weise mit einem um die Drehtellerdrehachse d drehbaren Drehteller 6 ausgestattet. Der Drehteller 6 wiederum ist vorzugsweise auf einer Schwinge 7, die auf einer Schwenkachse S schwenkbar ist, gelagert. Die Verfahrbarkeit der Werkzeugaufnahme 5 in den Raumrichtungen wird im gezeigten Beispiel durch entsprechende Linearführungen gewährleistet. Es sind jedoch auch andere Möglichkeiten, das in der Werkstückaufnahme 3 aufgenommene Werkstück 4 und das Werkzeug 2 relativ zueinander zu bewegen, beispielsweise indem der Werkzeugträger 5 an einem Hexapoden aufgenommen ist.

Erfindungswesentlich ist jedoch, dass das Werkzeug 2 um eine Werkzeugschwenkachse W schwenkbar in einer Werkzeugaufnahme 8 aufgenommen ist.

Dadurch wird zum Einen sichergestellt, dass sich das Werkzeug beim Fertigen einer Vertiefung, wie beispielsweise einer Nut, nicht im Werkstück 4 verkeilt, sondern immer mit der korrekten Orientierung der Schneide 9 relativ zu der vorgegebenen Bewegungsbahn durch das Material geführt wird. Erfindungsgemäß ist die Werkzeugaufnahme 8 an einem Linearantrieb 10 aufgenommen. Ein derartiger Linearantrieb 10 ermöglicht eine schnelle Werkzeugbewegung, wobei erfindungsgemäß der Linearantrieb 10 wiederum selbst um eine Linearantriebsschwenkachse L schwenkbar an dem Werkzeugträger 5 aufgenommen ist. Dabei verlaufen die Werkzeugschwenkachse 5 und die Linearantriebsschwenkachse L vorzugsweise parallel zueinander, wobei nicht ausgeschlossen ist, dass beide Achsen zusammenfallen können, was insbesondere von der jeweiligen Position der Werkzeugaufnahme 8 entlang des Bewegungsbereichs des Linearantriebs 10 abhängt.

Vorzugsweise sieht das Verfahren nun vor, dass anhand der zu fertigenden Kontur des Werkstücks 4 zunächst die hierfür notwendigen Bewegungsbahnen der einzelnen Schnittbewegungen berechnet werden. Eine geeignete Steuerungseinrichtung der Vorrichtung kann dann vorzugsweise unter Ausnutzung aller zur Verfügung stehenden Bewegungsmöglichkeiten der Maschine das Werkzeug relativ zum Werkstück entlang dieser Bewegungsbahnen bewegen. Dabei überlagern sich die Geschwindigkeiten der einzelnen Antriebe vorteilhafterweise. Vorzugsweise werden hierbei Schnittgeschwindigkeiten von wenigstens 100 m/min, vorzugsweise von mehr als 200 m/min erreicht. Bei dem Verfahren entspricht dabei die Geschwindigkeit der Relativbewegung von Werkzeug 2 und Werkstück 4 entlang der durch die Verfahr- und Verschwenkantriebe der Vorrichtung erzeugten Bewegungsbahn der Schnittgeschwindigkeit. Insbesondere der Linearantrieb 10 kann dabei wesentlich zum Erreichen hoher Schnittgeschwindigkeiten beitragen.

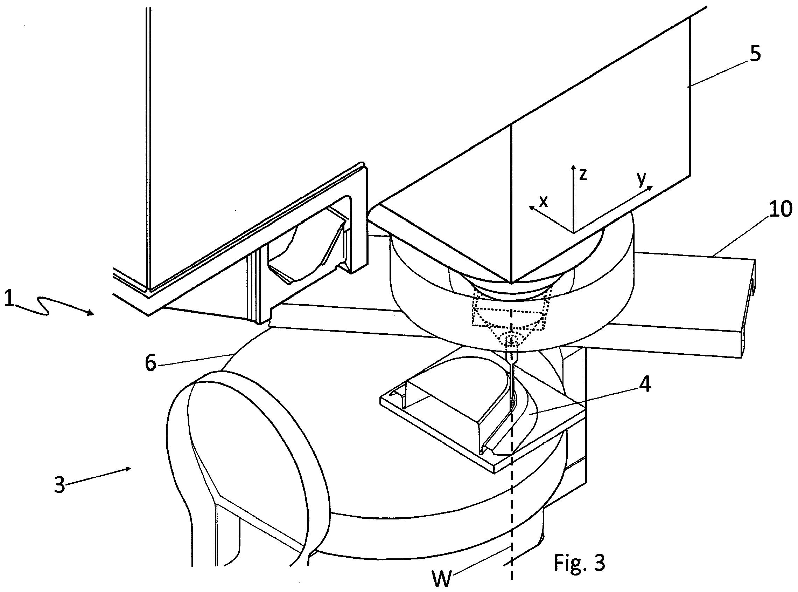

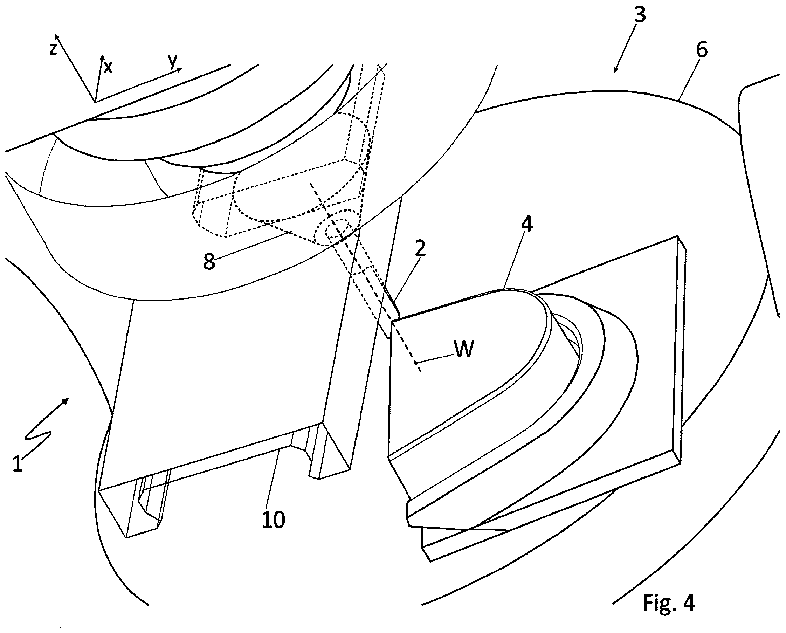

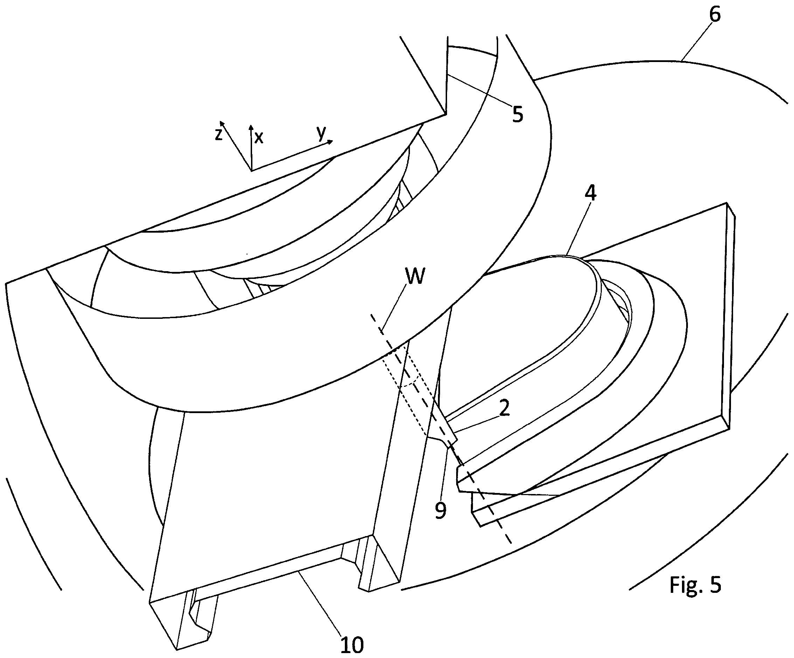

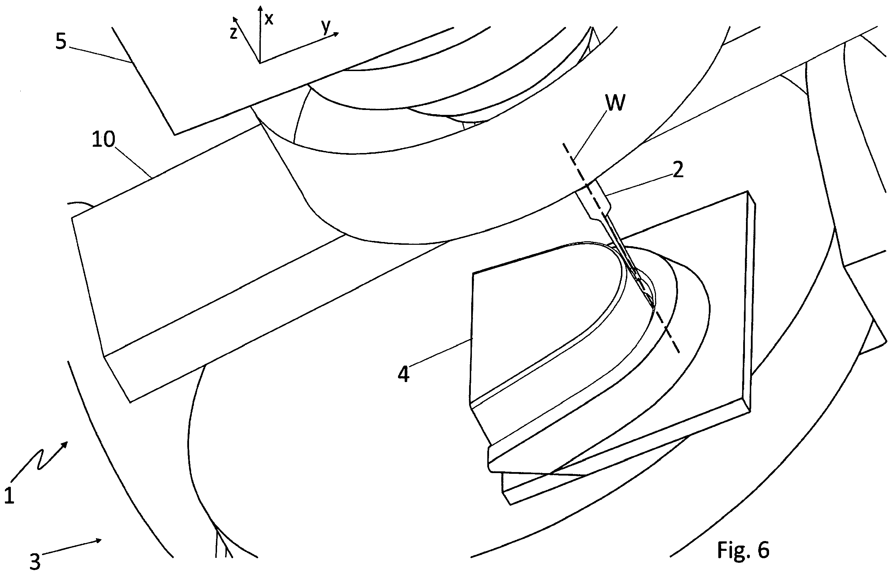

In den Fig. 3, 4, 5 und 6 ist eine beispielhafte Schnittbewegung bei der Fertigung einer U-förmigen Vertiefung 11 in einem beispielhaften Werkstück 4 dargestellt. Dabei taucht das Werkzeug 2 mit einem im Wesentlichen schwertförmig ausgestalteten Werkzeugbereich 12 in die Vertiefung ein.

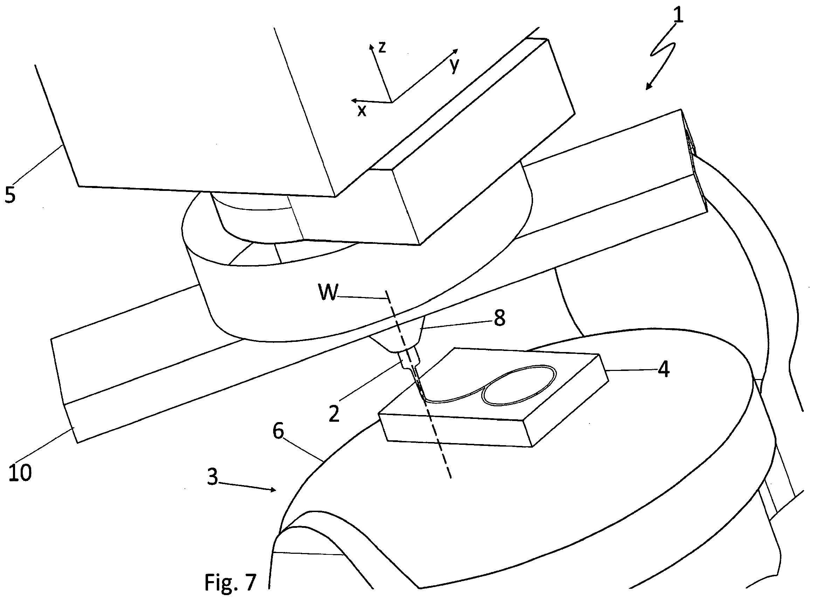

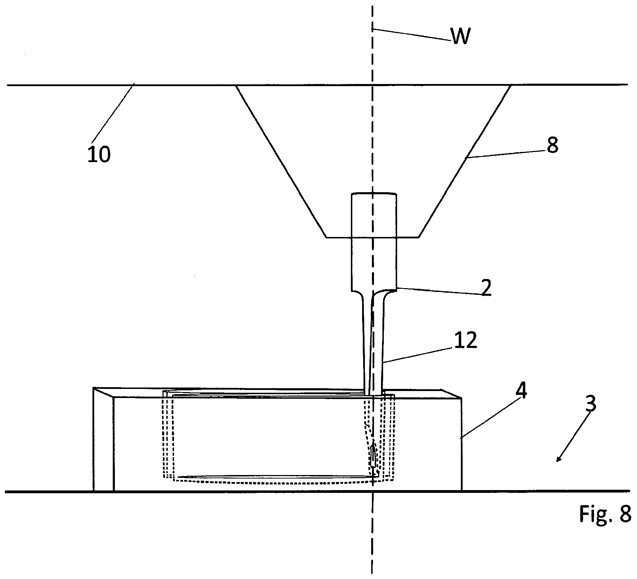

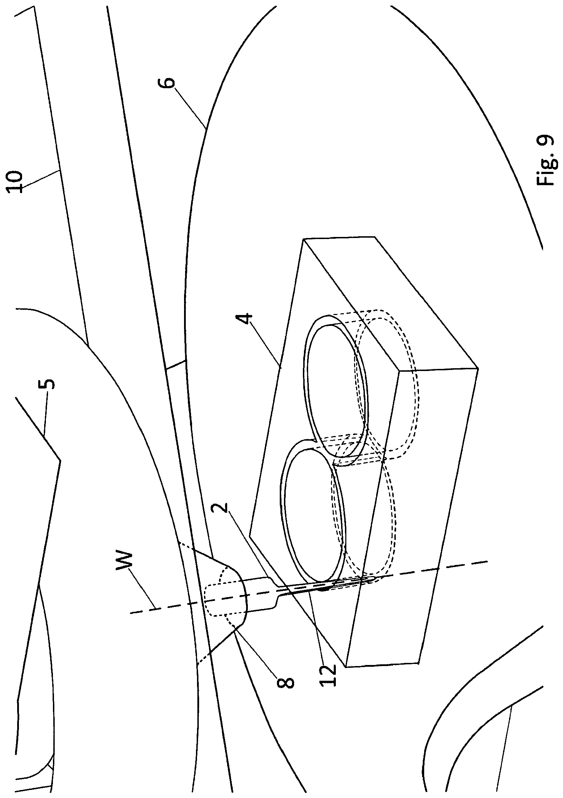

In den Fig. 7 bis 9 ist eine entsprechende beispielhafte Fertigung einer nutförmigen Vertiefung in Form einer Acht dargestellt. Dabei zeigen die Fig. 8 und 9 ein späteres Fertigungsstadium, bei dem das Werkzeug 2 bereits mit einem wesentlichen Teil seines schwertförmig ausgestalteten Werkzeugbereichs 12 in die Nut eingetaucht ist. In Fig. 7 dagegen hat die Fertigung der Vertiefung erst begonnen. Das Werkzeug 2 befindet sich im ersten Durchlauf der im gezeigten Bespiel achtförmigen Bewegungsbahn. Diese achtförmige Bewegungsbahn wird mehrfach durchlaufen und mit jedem Durchlauf ein Stück weit in Richtung des Grundes der zu fertigenden Vertiefung, d.h. in zur Werkzeugschwenkachse W paralleler Richtung versetzt.

Die beispielhaft dargestellten Werkzeuge 2 weisen allesamt schwertförmige Werkzeugbereiche 12 auf, die so gestaltet sind, dass sie bei der Durchführung des Verfahrens in eine zu fertigende Vertiefung eintauchen können. An der von diesem Werkzeugbereich 12 entlang der Werkzeugschwenkachse W abgewandten Ende des Werkzeugs 2 weist dieses einen weiteren Werkzeugbereich 13 auf, der vorteilhafterweise so ausgestaltet ist, dass er durch die Werkzeugaufnahme 8 aufgenommen werden kann.

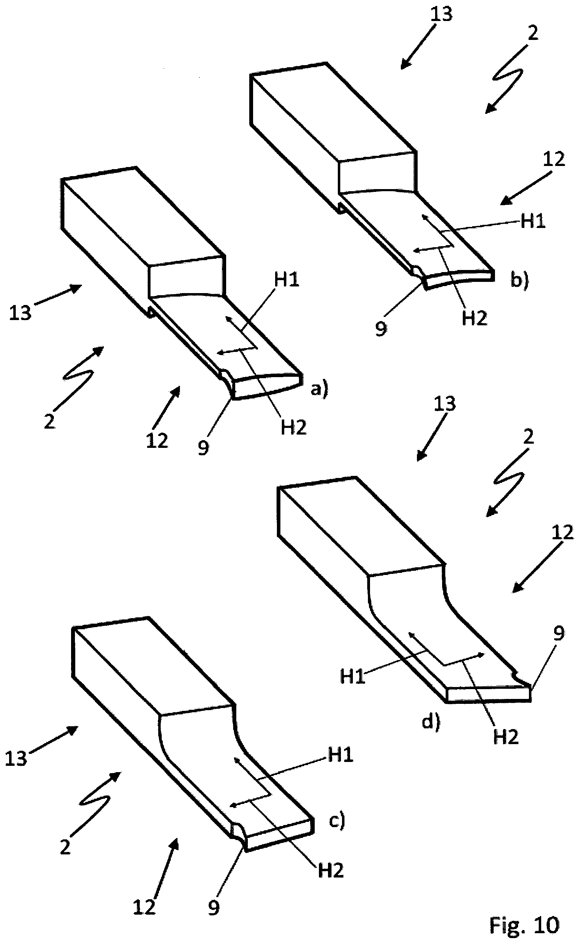

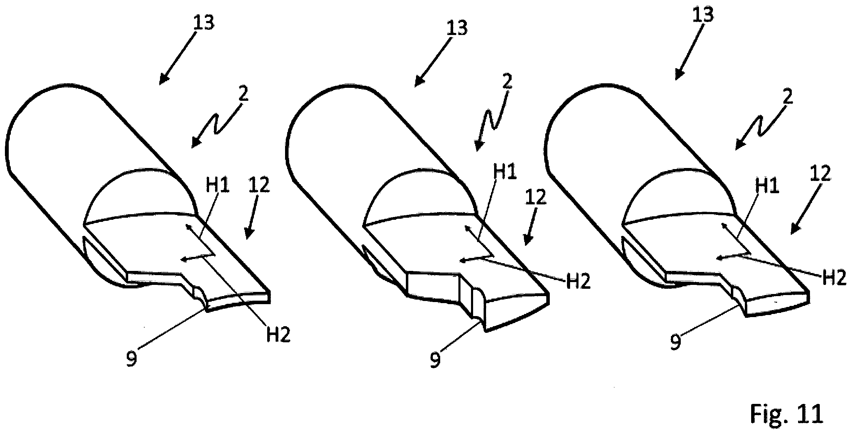

Dabei weist der Werkzeugbereich 12 eine erste Haupterstreckungsrichtung H1 und eine zweite Haupterstreckungsrichtung H2 auf. Die erste Haupterstreckungsrichtung H1 ist vorzugsweise parallel zur Werkzeugschwenkachse W orientiert, wenn das Werkzeug 2 in der Werkzeugaufnahme 8 aufgenommen ist. Dabei sind vorteilhafterweise, wie es im Fall der beispielhaften Werkzeuge 2 aus den Fig. 10a, 10b, 11a und 11c der Fall ist, Flächen des Werkzeugs 2, insbesondere des Werkzeugbereichs 12, entlang der zweiten Haupterstreckungsrichtung H2 gekrümmt. Die zweite Haupterstreckungsrichtung H2 ist aufgrund der Schwenkbewegung des Werkzeugs 2 parallel zur Bewegungsrichtung am jeweiligen Punkt der Bewegungsbahn, an dem sich das Werkzeug 2 befindet, orientiert. Durch die gekrümmten Flächen wird eine bessere Verschwenkbarkeit des Werkzeugs 2 bzw. des Werkzeugbereichs 12 in der zu fertigenden Vertiefung erreicht. Dabei handelt es sich gemäß einer vorteilhaften Ausführungsform um zwei konvexe Flächen, wodurch die Verschwenkbarkeit um die Werkzeugschwenkachse W in beide Richtungen verbessert wird. Dies wäre beispielsweise im Fall der in den Fig. 7 bis 9 schematisch dargestellten Fertigung einer achtförmigen Nut vorteilhaft, da hier das Werkzeug, um dem Verlauf der achtförmigen Bewegungsbahn zu folgen, in beide Richtungen der Werkzeugschwenkachse W verschwenkt werden muss.

Es sind jedoch auch Werkzeuge mit einer konvexen und einer konkav gekrümmten Fläche denkbar. Derartige Werkzeuge wären beispielsweise vorteilhaft, wenn eine Vertiefung, wie beispielsweise die beispielhaft in den Fig. 3 bis 6 dargestellte U-förmige Vertiefung gefertigt werden soll. Wird die Bewegungsbahn der entsprechend U-förmigen Schnittbewegung immer in der gleichen Richtung entlang der Bewegungsbahn durchlaufen, so muss die Verschwenkbewegung des Werkzeugs um die Werkzeugschwenkachse W nur in einer Schwenkrichtung stattfinden, weshalb sich die konvex/konkave Ausbildung anbietet, da diese zwar nur die Schwenkbewegung zur Fertigung einer gekrümmten Vertiefung in einer Richtung, diese aber dafür umso stärker begünstigt.

Insbesondere bei einer Ausgestaltung mit zwei konkav gekrümmten Flächen ist es vorteilhaft, die Schneide 9 entlang der zweiten Haupterstreckungsrichtung H2 an einer Stelle des Werkzeugs 2 bzw. des Werkzeugsbereichs 12 vorzusehen, indem das Werkzeug 2 bzw. der Werkzeugbereich 12 die größte Dicke in zu seinen Haupterstreckungsrichtungen H1 und H2 rechtwinkliger Richtung aufweist.

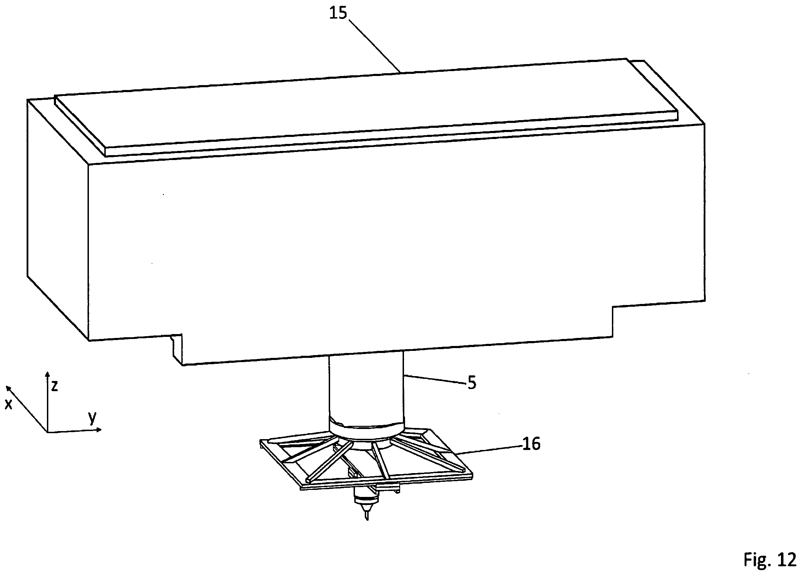

In Fig. 12 ist ein Beispiel der erfindungsgemäßen Vorrichtung dargestellt. Der Werkzeugträger 5 ist in vorteilhafter Weise an einer Traverse 15 aufgenommen. Die Traverse wird vorzugsweise in X-Richtung verfahrbar an der erfindungsgemäßen Vorrichtung aufgenommen. Der Werkzeugträger 5 ist in Y- und/oder Z-Richtung relativ zur Traverse 15 verfahrbar. An dem Werkzeugträger 5 ist die Linearantriebsanordnung 16 aufgenommen.

Die Linearantriebsanordnung 16 weist erfindungsgemäß neben dem Linearantrieb 10 einen weiteren Linearantrieb 14 auf. Dieser ist vorzugsweise rechtwinklig zum Linearantrieb 10 angeordnet. Hierdurch verfügt die beispielhafte erfindungsgemäße Vorrichtung über zwei Linearantriebe, welche jeweils entsprechend hohe Verfahrgeschwindigkeiten bzw. Beschleunigungen der Werkzeugaufnahme 8 und damit des Werkzeugs 2 zum Werkzeugträger 5 ermöglichen können. Hierdurch wird eine noch höhere Flexibilität bei den erzeugbaren Relativbewegungen des Werkzeugs 2 zum Werkstück 4 ermöglicht.

### BEZUGSZEICHENLISTE

- 1: Vorrichtung
- 2: Werkzeug
- 3: Werkstückaufnahme
- 4: Werkstück
- 5: Werkzeugträger
- 6: Drehteller
- 7: Schwinge
- 8: Werkzeugaufnahme
- 9: Schneide
- 10: Linearantrieb
- 11: Vertiefung
- 12: Werkzeugbereich
- 13: Werkzeugbereich
- 14: Weiterer Linearantrieb
- 15: Traverse
- 16: Linearantriebsanordnung

- X: Raumrichtung
- Y: Raumrichtung
- Z: Raumrichtung
- S: Schwenkachse
- W: Werkzeugschwenkachse
- L: Linearantriebsschwenkachse
- H1: erste Haupterstreckungsrichtung
- H2: zweite Haupterstreckungsrichtung

## Patentansprüche

1. Vorrichtung (1) zur spanabhebenden Bearbeitung von, vorzugsweise metallischen, Werkstücken (4), mit einem Werkzeug (2) und einer Werkstückaufnahme (3), wobei das Werkzeug (2) zur spanabhebenden Bearbeitung des Werkstücks (4) relativ zu einem in der Werkstückaufnahme (3) aufgenommenen Werkstück (4) entlang einer vorgebbaren Bewegungsbahn bewegbar ist, wobei das Werkzeug (2) relativ zu einem in der Werkstückaufnahme (3) aufgenommenen Werkstück (4) um eine Werkzeugschwenkachse (W) schwenkbar ist, wobei die Werkzeugschwenkachse (W) zumindest im Wesentlichen senkrecht zu der Bewegungsbahn orientiert ist, wobei die Vorrichtung dazu ausgebildet ist, durch ein Verschwenken des Werkzeugs (2) relativ zum Werkstück (4) um die Werkzeugschwenkachse (W) die Ausrichtung der Schneide (9) des Werkzeugs (2) entsprechend des Verlaufs der Bewegungsbahn zu korrigieren,
wobei die Werkzeugaufnahme (8), in der das Werkzeug (2) aufgenommen ist, an einem Linearantrieb (10) der Vorrichtung (1) aufgenommen ist, der wiederum selbst um eine Linearantriebschwenkachse (L) schwenkbar an einem Werkzeugträger (5) der Vorrichtung (1) aufgenommen ist,
**dadurch gekennzeichnet,**
**dass** der Werkzeugträger (5) in drei Raumrichtungen (X, Y, Z) verfahrbar ist und dass die Vorrichtung einen weiteren Linearantrieb (14) aufweist, der um eine Linearantriebschwenkachse (L) schwenkbar an dem Werkzeugträger (5) aufgenommen ist.

2. Vorrichtung nach Anspruch 1,
**dadurch gekennzeichnet,**
**dass** die Vorrichtung (1) eine Steuerung aufweist, die dafür eingerichtet ist, das Werkzeug (2) abhängig vom Verlauf der Bewegungsbahn relativ zum Werkstück (4) um die Werkzeugschwenkachse (W) zu verschwenken.

3. Vorrichtung nach einem der vorigen Ansprüche,
**dadurch gekennzeichnet,**
**dass** der weitere Linearantrieb (14) senkrecht zu dem Linearantrieb (10) angeordnet ist.

4. Vorrichtung nach einem der vorigen Ansprüche,
**dadurch gekennzeichnet,**
**dass** der Linearantrieb (10) und/oder der weitere Linearantrieb (14) Bewegungsgeschwindigkeiten des Werkzeugs (2) relativ zum Werkzeugträger (5) von wenigstens 80 m/min, vorzugsweise von wenigstens 120 m/min, ermöglicht.

5. Vorrichtung nach einem der vorigen Ansprüche,
**dadurch gekennzeichnet,**
**dass** der Linearantrieb (10) und/oder der weitere Linearantrieb (14) Beschleunigungen und/oder Verzögerungen des Werkzeugs (2) relativ zum Werkzeugträger (5) von wenigstens 50 m/s², vorzugsweise von wenigstens 80 m/s², ermöglicht.

6. Vorrichtung nach einem der vorigen Ansprüche,
**dadurch gekennzeichnet,**
**dass** die Vorrichtung (1) eine Steuerung aufweist, die dafür eingerichtet ist, die Bewegungen des Werkzeugträgers (5) relativ zum Werkstück (4) und des Werkzeugs (2) relativ zum Werkzeugträger (5) abhängig vom gewünschten Verlauf der Bewegungsbahn des Werkzeugs (2) relativ zum Werkstück (4) aufeinander abzustimmen.

7. Vorrichtung nach einem der vorigen Ansprüche,
**dadurch gekennzeichnet,**
**dass** das Werkzeug (2) und/oder ein Werkzeugbereich (12), der vorzugsweise derart gestaltet ist, dass er bei der Fertigung einer Vertiefung, insbesondere einer Nut, in diese Vertiefung eintauchen kann, eine erste Haupterstreckungsrichtung (H1) aufweist und vorzugsweise die Vorrichtung (1) derart gestaltet ist, dass die erste Haupterstreckungsrichtung (H1), zumindest in etwa, parallel zur Werkzeugschwenkachse (W) ist.

8. Vorrichtung nach einem der vorigen Ansprüche,
**dadurch gekennzeichnet,**
**dass** das Werkzeug (2) und/oder ein Werkzeugbereich (12), der vorzugsweise derart gestaltet ist, dass er bei der Fertigung einer Vertiefung, insbesondere einer Nut, in diese Vertiefung eintauchen kann, eine zweite Haupterstreckungsrichtung (H2) aufweist, und vorzugsweise die Vorrichtung (1) derart gestaltet ist, dass die zweite Haupterstreckungsrichtung (H2) während der Schnittbewegung parallel zur Bewegungsrichtung der Schnittbewegung ausrichtbar ist.

9. Vorrichtung nach Anspruch 7 in Verbindung mit Anspruch 8,
**dadurch gekennzeichnet,**
**dass** eine zu der ersten Haupterstreckungsrichtung (H1) und der zweiten Haupterstreckungsrichtung (H2) zumindest im Wesentlichen parallel orientierte Fläche des Werkzeugs (2) und/oder des Werkzeugbereichs (12) eine Krümmung, insbesondere eine Krümmung entlang der zweiten Haupterstreckungsrichtung (H2), aufweist.

10. Verfahren zur spanabhebenden Bearbeitung von, vorzugsweise metallischen, Werkstücken (4) mit einer Vorrichtung nach einem der vorigen Ansprüche wobei die Schneide (9) des Werkzeugs (2) an dem Werkstück (4) in Eingriff gebracht wird und eine spanabhebende Schnittbewegung entlang einer vorgegebenen Bewegungsbahn des Werkzeugs (2) relativ zum Werkstück (4) durchgeführt wird, wobei das Werkzeug (2) um die Werkzeugschwenkachse (W) in Abhängigkeit von dem Verlauf der Bewegungsbahn verschwenkt wird, wobei das Werkzeug (2) relativ zum Werkstück (4) derart bewegt wird, dass sich Bewegungen des Werkzeugträgers (5) relativ zum Werkstück (4) und des Werkzeugs (2) relativ zum Werkzeugträger (5) zu einer Bewegung des Werkzeugs (2) relativ zum Werkstück (4) überlagern.

11. Verfahren nach Anspruch 10,
**dadurch gekennzeichnet,**
**dass** das Werkzeug (2) derart verschwenkt wird, dass die Ausrichtung der Schneide (9) relativ zur Richtung der Schnittbewegung an jedem Ort entlang der Bewegungsbahn zumindest im Wesentlichen die gleiche ist.

12. Verfahren nach Anspruch 10 oder 11,
**dadurch gekennzeichnet,**
**dass** eine Mehrzahl Schnittbewegungen durchgeführt wird, wobei die Bewegungsbahnen der einzelnen Schnittbewegungen derart zueinander versetzt sind, dass eine vorgegebene Werkstückkontur erzeugt wird.

13. Verfahren nach einem der Ansprüche 10 bis 12,
**dadurch gekennzeichnet,**
**dass** die vorgegebene Werkstückkontur eine Vertiefung, insbesondere eine Nut, aufweist.

14. Verfahren nach einem der Ansprüche 10 bis 13,
**dadurch gekennzeichnet,**
**dass** das Werkzeug während der Schnittbewegung so zum Werkstück orientiert ist, dass die Werkzeugschwenkachse sich von der Werkzeugaufnahme (8), in der das Werkzeug um die Werkzeugschwenkachse (W) verschwenkbar aufgenommen ist, zum Grund der Vertiefung hin erstreckt.

15. Verfahren nach einem der Ansprüche 10 bis 14,
**dadurch gekennzeichnet,**
**dass** das Werkstück (4) Bestandteil einer Spritzgussform, einer RIM-Form und/oder einer Form für Reifen oder eine Spritzgussform ist und vorzugsweise die Vertiefung zur Formung der Verstärkungen bei der Fertigung eines Kunststoff- oder Aluminium-Spritzgussbauteils mit steg- oder rippenförmigen Verstärkungen bestimmt ist.

## Claims

1. Device (1) for the chip-removing processing of preferably metal workpieces (4), with a tool (2) and a workpiece holder (3), wherein the tool (2) for the chip-removing processing of the workpiece (4) is movable along a predeterminable path of movement relative to a workpiece (4) held in the workpiece holder (3), wherein the tool (2) is able to pivot about a tool pivotal axis (W) relative to a workpiece (4) held in the workpiece holder (3), wherein the tool pivotal axis (W) is oriented at least substantially perpendicularly to the path of movement, wherein the device is designed through pivoting the tool (2) relative to the workpiece (4) about the tool pivotal axis (W) to correct the alignment of the cutter (9) of the tool according to the contour of the path of movement, wherein the tool holder (8), in which the tool (2) is received, is received on a linear drive (10) of the device (1), which (drive) in turn is itself held on a tool carrier (5) of the device (1) and is able to pivot about a linear drive pivotal axis (L)
**characterised in that** the tool carrier (5) is movable in three spatial directions (X, Y, Z) and that the device has a further linear drive (14) which is mounted on the tool carrier (5) where it can pivot about a linear drive pivotal axis (L).

2. Device according to claim 1, **characterised in that** the device (1) has a control which is set up for pivoting the tool (2) about the tool pivotal axis (W) dependent on the contour of the movement path relative to the workpiece (4).

3. Device according to one of the preceding claims **characterised in that** the further linear drive (14) is arranged perpendicular to the linear drive (10).

4. Device according to one of the preceding claims, **characterised in that** the linear drive (10) and/or the further linear drive (14) enable(s) motion speeds of the tool (2) relative to the tool carrier (5) of at least 80 m/min, preferably at least 120 m/min.

5. Device according to one of the preceding claims, **characterised in that** the linear drive (10) and/or the further linear drive (14) enable(s) accelerations and/or decelerations of the tool (2) relative to the tool carrier (5) of at least to 50 m/s², preferably of at least 80 m/s².

6. Device according to one of the preceding claims **characterised in that** the device (1) has a control which is set up to match the movements of the tool carrier (5) relative to the workpiece (4) and of the tool (2) relative to the tool carrier (5) to one another dependent on the desired contour of the path of movement of the tool (2) relative to the workpiece (4).

7. Device according to one of the preceding claims, **characterised in that** the tool (2) and /or a tool region (12), which is preferably configured so that during the production of a recess, in particular a groove, it can project into this recess, has a first main direction of extent (H1) and preferably the device (1) is designed so that the first main direction of extent (H1) is at least approximately parallel to the tool pivotal axis (W).

8. Device according to one of the preceding claims, **characterised in that** the tool (2) and/or a tool region (12), which is preferably configured so that during the production of a recess, in particular a groove, it can project into this recess, has a second main direction of extent (H2), and preferably the device (1) is configured so that the second main direction of extent (H2) can be aligned parallel to the direction of movement of the cutting movement during the cutting movement.

9. Device according to claim 7 in conjunction with claim 8, **characterised in that** a surface of the tool (2) and/or of the tool region oriented at least substantially parallel to the first main direction of extent (H1) and the second main direction of extent (H2) has a curvature, in particular a curvature along the second main direction of extent (H2).

10. Method for the chip-removing processing of preferably metal workpieces (4) with a device according to one of the preceding claims, wherein the cutter (9) of the tool (2) is brought into engagement on the workpiece (4), and a chip-removing cutting movement is carried out relative to the workpiece (4) along a predetermined path of movement of the tool (2), wherein the tool (2) is pivoted about the tool pivotal axis (W) in dependence on the contour of the path of movement, wherein the tool (2) is moved relative to the workpiece (4) in such a way that movements of the tool carrier (5) relative to the workpiece (4) and of the tool (2) relative to the tool carrier (5) are superimposed on a movement of the tool (2) relative to the workpiece (4).

11. Method according to claim 10, **characterised in that** the tool (2) is pivoted so that the alignment of the cutter (9) relative to the direction of the cutting movement is at least substantially the same at each place along the path of movement.

12. Method according to claim 10 or 11 **characterised in that** a plurality of cutting movements is carried out wherein the paths of movement of the individual cutting movements are off-set relative to one another so that a predetermined workpiece contour is created.

13. Method according to one of claims 10 to 12 **characterised in that** the predetermined workpiece contour has a recess, in particular a groove.

14. Method according to one of claims 10 to 13, **characterised in that** the tool is oriented during the cutting movement relative to the workpiece so that the tool pivotal axis extends from the tool holder (8) in which the tool is housed for pivotable movement about the tool pivotal axis (W), to the bottom of the recess.

15. Method according to one of claims 10 to 14 **characterised in that** the workpiece (4) is a component part of an injection casting mould, an RIM mould and/or of a mould for tyres or is an injection casting mould and preferably the recess is intended for forming reinforcements during the production of a plastics or aluminium injection moulded component having web-like or rib-like reinforcements.

## Revendications

1. Dispositif (1) de traitement par enlèvement de copeaux de pièces à usiner (4) de préférence métalliques, lequel est doté d'un outil (2) et d'un réceptacle de pièces à usiner (3), sachant que, pour le traitement par enlèvement de copeaux de la pièce à usiner (4), l'outil (2) peut être déplacé, par rapport à une pièce à usiner (4) prise en charge par le réceptacle de pièces à usiner (3), le long d'une trajet de déplacement qui peut être prédéterminé, sachant que l'outil (2) peut être pivoté, par rapport à une pièce à usiner (4) prise en charge par le réceptacle de pièces à usiner (3), autour d'un axe de pivotement de l'outil (W), sachant que l'axe de pivotement de l'outil (W) est orienté au moins essentiellement verticalement par rapport au trajet de déplacement, sachant que le dispositif est conçu pour corriger, par pivotement de l'outil (2) autour de l'axe de pivotement de l'outil (W), par rapport à la pièce à usiner (4), l'orientation du tranchant (9) de l'outil (2) en fonction du déroulement du trajet de déplacement,
sachant que le porte-outil (8), qui reçoit l'outil (2), est raccordé à un dispositif d'entraînement linéaire (10) du dispositif (1), qui, pouvant pivoter autour d'un axe de pivotement d'entraînement linéaire (L), est lui-même reçu sur un porte-outil (5) du dispositif (1),
**caractérisé en ce que**
le porte-outil (5) peut être déplacé dans trois directions (X, Y, Z) et que le dispositif présente un autre dispositif d'entraînement linéaire (14) qui, pouvant pivoter autour d'un axe de pivotement d'entraînement linéaire (L), est reçu sur le porte-outil (5).

2. Dispositif selon la revendication 1,
**caractérisé en ce que**
le dispositif (1) présente une commande, qui est conçue pour faire pivoter, par rapport à la pièce à usiner (4), l'outil (2) autour de l'axe de pivotement de l'outil (W) en fonction du déroulement du trajet de déplacement.

3. Dispositif selon l'une des revendications précédentes,
**caractérisé en ce que**
l'autre dispositif d'entraînement linéaire (14) est disposé perpendiculairement par rapport au dispositif d'entraînement linéaire (10).

4. Dispositif selon l'une des revendications précédentes,
**caractérisé en ce que**
le dispositif d'entraînement linéaire (10) et / ou l'autre dispositif d'entraînement linéaire (14) permet de déplacer l'outil (2) par rapport au porte-outil (5) à des vitesses d'au moins 80 m/min, de préférence d'au moins 120 m/min.

5. Dispositif selon l'une des revendications précédentes,
**caractérisé en ce que**
le dispositif d'entraînement linéaire (10) et / ou l'autre dispositif d'entraînement linéaire (14) permet des accélérations et / ou des ralentissements de l'outil (2) par rapport au porte-outil (5) d'au moins 50 m/s², de préférence d'au moins 80 m/s².

6. Dispositif selon l'une des revendications précédentes,
**caractérise en ce que**
le dispositif (1) présente une commande, qui est conçue pour coordonner les mouvements du porte-outil (5) par rapport à la pièce à usiner (4) et ceux de l'outil (2) par rapport au porte-outil (5) en fonction du déroulement du trajet de déplacement désiré de l'outil (2) par rapport à la pièce à usiner (4).

7. Dispositif selon l'une des revendications précédentes,
**caractérisé en ce que**
l'outil (2) et / ou une partie d'outil (12), qui est conçue de manière à ce que, lors de la réalisation d'une cavité, en particulier d'une rainure, il / elle puisse plonger dans cette cavité, présente une première direction d'étendue principale (H1) et que, de préférence, le dispositif (1) est conçu de manière à ce que la première direction d'étendue principale (H1) soit, au moins à peu près, parallèle à l'axe de pivotement de l'outil (W).

8. Dispositif selon l'une des revendications précédentes,
**caractérisé en ce que**
l'outil (2) et / ou une partie d'outil (12), qui est conçu/e de manière à ce que, lors de la réalisation d'une cavité, en particulier d'une rainure, il / elle puisse plonger dans cette cavité, présente une deuxième direction d'étendue principale (H2) et que, de préférence, le dispositif (1) est conçu de manière à ce que la deuxième direction d'étendue principale (H2) puisse être orientée, pendant le mouvement de coupe, parallèlement à la direction de déplacement du mouvement de coupe.

9. Dispositif selon la revendication 7 en relation avec la revendication 8,
**caractérisé en ce que**
une surface de l'outil (2) et / ou d'une section d'outil (12) orienté/e au moins sensiblement parallèlement à la première direction d'étendue principale (H1) et à la deuxième direction d'étendue principale (H2) présente une courbure, en particulier une courbure le long de la deuxième direction d'étendue principale (H2).

10. Procédé de traitement par enlèvement de copeaux de pièces à usiner (4), de préférence métalliques, avec un dispositif selon l'une des revendications précédentes, sachant que le tranchant (9) de l'outil (2) est mis en prise avec la pièce à usiner (4) et qu'un mouvement de coupe de copeaux est exécuté le long d'un trajet de déplacement prédéterminé de l'outil (2) par rapport à la pièce à usiner (4), sachant que l'outil (2) est pivoté autour de l'axe de pivotement de l'outil (W) en fonction du déroulement du trajet de déplacement,
sachant que l'outil (2) est déplacé par rapport à la pièce à usiner (4) de manière à ce que des mouvements du porte-outil (5) par rapport à la pièce à usiner (4) et de l'outil (2) par rapport au porte-outil (5) se chevauchent avec un mouvement de l'outil (2) par rapport à la pièce à usiner (4)

11. Procédé selon la revendication 10,
**caractérisé en ce que**
l'outil (2) peut être pivoté de manière à ce que l'orientation du tranchant (9) par rapport à la direction du mouvement de coupe soit sensiblement la même à chaque endroit, le long du trajet de déplacement.

12. Procédé selon revendication 10 ou 11,
**caractérisé en ce que**
sont exécutés plusieurs mouvements de coupe, sachant que les trajets de déplacement des mouvements de coupe individuels sont décalés les uns par rapport aux autres de manière à ce qu'un contour de pièce à usiner (4) prédéterminé soit réalisé.

13. Procédé selon l'une des revendications 10 à 12,
**caractérisé en ce que**
le contour de pièce à usiner (4) prédéterminé présente une cavité, en particulier une rainure.

14. Procédé selon l'une des revendications 10 à 13,
**caractérisé en ce que**,
pendant le mouvement de coupe, l'outil est orienté par rapport à la pièce à usiner de manière à ce que l'axe de pivotement de l'outil (W) s'étende du réceptacle d'outil (8), dans lequel l'outil est logé en pivotement autour de l'axe de pivotement de l'outil (W), vers le fond de la cavité.

15. Procédé selon l'une des revendications 10 à 14,
**caractérisé en ce que**
la pièce à usiner (4) est un composant d'un moule d'injection RIM et / ou d'un moule pour pneus ou un moule d'injection, et que, de préférence, la cavité est destinée à former les renforcements lors de la fabrication d'une pièce moulée par injection en matière synthétique ou en aluminium dotée de renforcements en forme de pattes ou de nervures.
